Europäisches Patentamt

European Patent Office

Office européen des brevets

(11) Publication number: **0 519 549 A2**

# EUROPEAN PATENT APPLICATION

(21) Application number: **92201681.1**

(22) Date of filing: **10.06.92**

(51) Int. Cl.5: **H04B 7/08**, H04B 7/26,
H04Q 7/04

(30) Priority: **19.06.91 GB 9113241**

(43) Date of publication of application:
**23.12.92 Bulletin 92/52**

(84) Designated Contracting States:
**DE FR GB IT**

(71) Applicant: **PHILIPS ELECTRONICS UK LIMITED**
**Philips House 1-19 Torrington Place**
**London WC1E 7HD(GB)**

(84) **GB**

(71) Applicant: **N.V. Philips' Gloeilampenfabrieken**
**Groenewoudseweg 1**

**NL-5621 BA Eindhoven(NL)**

(84) **DE FR IT**

(72) Inventor: **Halfpenny, John Wedgwood**
**c/o Philips Telecom, PO Box 24, St. Andrews**
**Road**
**Cambridge CB4 1DP(GB)**

(74) Representative: **Moody, Colin James et al**
**PHILIPS ELECTRONICS Patents and Trade**
**Marks Department Philips House 1-19**
**Torrington Place**
**London WC1E 7HD(GB)**

(54) **A method of voting in a radio communication system and a system therefor.**

(57) In order to facilitate voting in a radio communication system comprising a system controller (SC)
linked to respective fixedly sited primary stations
(PS1,PS2: PS11,PS12) and receiving stations
(Rx1,Rx2; Rx5,Rx6; Rx11,Rx12; Rx15,Rx16) distrib-
uted between two or more geographical cells
(C1,C2), each primary and receiving station includes
means (14) for measuring and producing an indica-
tion of the signal strength of a received message
signal. The indication of signal strength is encoded
and the bits are appended to the message signal
which is relayed by the primary or receiving station
to the system controller (SC). Voting means are
provided in the system controller (SC) for determin-
ing which primary or receiving station has received
the stronger (or strongest) message signal relating to
the same transmission by a secondary station (SS)
and for directing that a primary station and receiving
channels in the same cell participate in the subse-
quent speech/data transaction on a traffic channel.

FIG. 1

The present invention relates to a method of voting in a radio communications system and to a radio communications system therefor. The present invention is particularly applicable to a trunked private mobile radio (p.m.r.) system.

A typical wide area mobile radio system comprises a system controller, geographically spaced groups of cosited base or primary stations which effectively divide the operating area into adjacent operating cells, each primary station comprises a transceiver and a line unit by which the primary station can communicate with the system controller, and geographically spaced groups of cosited receiving stations which are provided in each cell and are coupled to the system controller. In each cell the receiving stations are provided to supplement the primary station transceivers in order to be able to receive relatively low powered signals from transmitters in mobile subscriber or secondary stations which are able to roam throughout the operating area. For simplicity it will be assumed that the number of primary stations or receiving stations at each site is the same and corresponds to the number of frequency channels and that there is one primary station or receiving station at each of the sites capable of transmitting/receiving or receiving only on each of the frequency channels.

When a secondary station wishes to initiate a call or conversely when a primary station wishes to initiate a call, the system controller has to decide which of the cells should communicate with the secondary station. A system of voting is frequently employed for making this decision. Voting is a process for selecting the strongest and/or clearest signal as received from the particular secondary station by the primary stations and receiving stations receiving the same signal on the same frequency. In practice the in-range primary and receiving stations measure the strength of the received signal and this value is relayed as a radio signal strength indication (RSSI) to the system controller which makes a decision as through which cell a speech or data transaction should be routed to obtain the best or clearest signal. Measuring and producing RSSIs is a known technique in the radio communications art and for example is disclosed in The Bell System Technical Journal January 1979 Vol. 58 No. 1 on page 26. However this prior disclosed technique relates to a mobile telephone unit determining whether the signal strength has become so low that the call-in-progress should be handed off.

In one known voting technique used in p.m.r. systems, the RSSI is relayed to the system controller by means of a tone whose frequency varies with the RSSI. A drawback to this known voting technique using tones is that the bandwidth which is required has to be taken at the expense of other signals. Also in certain applications such as trunked p.m.r. systems, there is insufficient bandwidth to relay RSSIs in this way. Further it is desired to effect voting as quickly as possible because it affects the time from call set-up to call-in-progress and could lead to a loss of information particularly if voting times exceed 40ms, the approximate length of a speech syllable.

An object of the present invention is to effect voting in p.m.r. systems in an efficient manner.

According to one aspect of the present invention there is provided a method of voting in a radio communication system in which encoded radio signal strength indications are appended to messages relayed to a system controller and in which the system controller votes on which of the radio signal strength indications is the best.

More particularly there is provided a method of voting in a radio communication system comprising a system controller linked to a plurality of fixedly sited stations capable of receiving signals on a predetermined channel, wherein each said station determines the strength of a received message signal, encodes an indication of the signal strength and appends the encoded signal strength indication to messages which are relayed by the station to the system controller, the system controller voting on which of the stations has received the stronger (or strongest) message signal.

According to a second aspect of the present invention there is provided a radio communication system comprising a system controller, a plurality of fixedly sited stations capable of receiving signals on a predetermined channel coupled by links to the system controller, each said station including means for measuring the strength of a received message signal and for providing an indication of the measured signal strength and means for appending said indication to the received message signal for forwarding to the system controller and said system controller including voting means for determining which of the said stations has received to the stronger (or strongest) message signal.

The fixedly sited stations may be primary stations equipped with transceivers or receiving only stations.

The invention is based on recognition of the fact that message signals received at the receiving sections of fixedly sited primary stations or the fixedly sited receiving stations are not continuous and more often than not there are gaps between successive message signals which enables RSSIs to be appended to its associated codeword. By the primary and receiving stations transmitting RSSIs in this way then the need to generate specific messages and/or tones is avoided. Furthermore since the RSSIs are appended to an associated messages signal then no changes are necessary to the data rate.

If desired a message signal, which may comprise only an address codeword, when received at a primary station or receiving station may be demodulated and decoded and the RSSI may be added to the demodulated signal prior to the signal and the RSSI being recoded and remodulated for onward transmission to the system controller. The operations of demodulation and remodulation are particularly applicable when the modulation is fast frequency shift keying (FFSK) which is very susceptible to phase distortion. Error detection may be provided by duplicating the RSSI and at the system controller the duplicate indications may be compared and accepted as being valid if they are the same.

The present invention will now be described, by way of example, with reference to the accompanying drawings, wherein:

Figure 1 is a block schematic diagram of a mobile radio system,

Figure 2 is block schematic diagram of a primary or base station,

Figure 3 is a diagram showing a plurality of concatenated message codewords as transmitted by a primary station,

Figure 4 is a diagram of a series of codewords as received by a primary station,

Figure 5 is a diagram of the same series of codewords as shown in Figure 4 with the addition of appended signal strength signals in the gaps between successive codewords, and

Figure 6 is a timing diagram derived from Figure 6.1 of MPT 1327 published January 1988 by Radiocommunications Division of the Department of Trade and Industry, London.

In the drawings the same reference numerals have been used to indicate corresponding features.

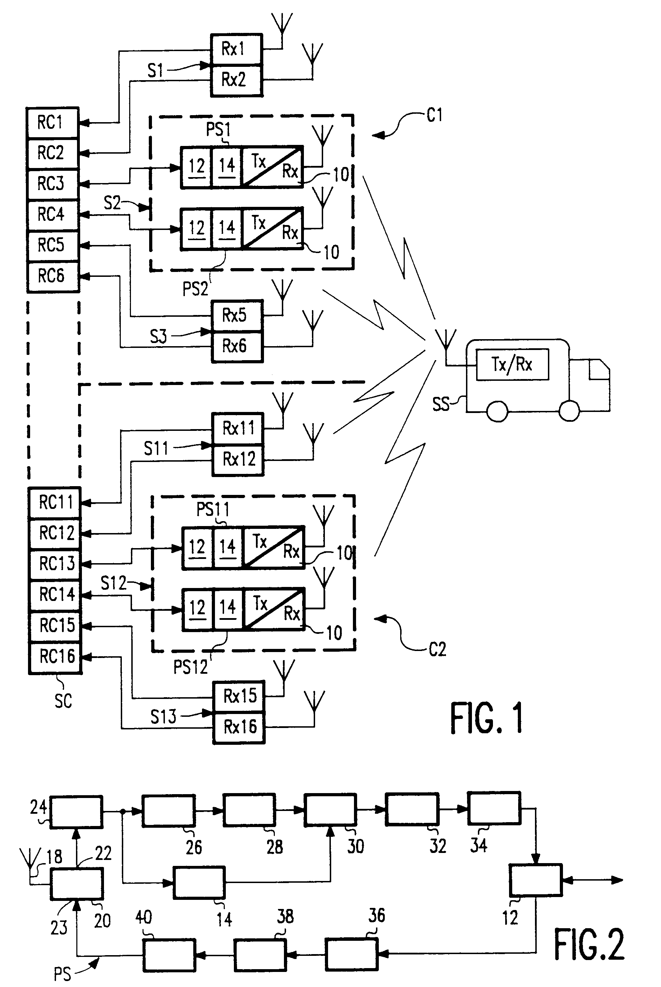

The mobile radio system shown in Figure 1 comprises a system controller SC which includes a plurality of radio control units RC1 to RC6 and RC11 to RC16 together with other intelligence, each radio control unit is connected by landline link to a respective primary or base station PS1, PS2, PS11 and PS12 and receiving stations Rx1,Rx2; Rx5,Rx6; Rx11,Rx12; and Rx15,Rx16. The primary stations and receiving stations are distributed in groups to provide radio cover in respective cells C1,C2 which together define the operating area of the radio system. Normally the primary stations or receiving stations belonging to a particular group are located at a single site and either share an antenna or have co-sited antennas. In Figure 1 the primary stations PS1, PS2 are located at one site S2 in the cell C1 and the primary stations PS11, PS12 are located at a second site S12 in the cell C2. Similarly, the groups of the receiving stations Rx1,Rx2; Rx5,Rx6, Rx11,Rx12 and Rx15,Rx16 are located at respective sites S1, S3, S11 and S13 within the cells C1,C2. However it is to be understood that the number of primary stations and receiving stations at each site is the same and is dependent on the number of allocated duplex frequency channels since each primary station usually transmits and receives on a dedicated duplex frequency channel and each receiving station receives on the return channel of a dedicated duplex frequency channel. At each site there is a primary/receiving station per channel. One system controller SC normally services several sites.

Each primary station includes a transceiver 10, a line unit 12 for coupling the respective primary station to its radio controller and means 14 for measuring the signal strength of a signal received from a secondary station. Each receiving station is substantially the same as a primary station except that it has only a receiver rather than a transceiver.

A mobile secondary station SS equipped with a suitable transceiver Tx/Rx is free to roam in and out of the cells C1,C2. The transceiver Tx/Rx is tunable to any of the available duplex frequency channels.

In certain types of mobile radio systems such as trunked p.m.r. systems, a duplex frequency control channel is provided which carries signalling information in the forward and return directions. Unless involved in a call on a traffic channel the secondary station SS returns to the control channel on which it was last active assuming that this is still possible. When setting up a call on a traffic channel the system controller SC has to decide through which cell a speech/data transaction should be handled. In practice the decision is based on which primary station or receiving station receives the strongest signal from a transmitting secondary station.

In Figure 1 it is assumed primary stations PS1 and PS11 are allocated the same forward and return control channels of a duplex frequency channel and the receiving stations Rx1,Rx5,Rx11 and Rx15 are allocated to the corresponding return control channel. When a secondary station SS wants to make a call or respond to a call, it tunes to the control channel, waits for an appropriate opportunity, and transmits its request/acknowledgement signal. At the primary stations PS1, PS11 and the receiving stations Rx1, Rx5, Rx11, Rx15, the strength of the received return control signal is measured by the signal strength measuring means 14 and an indication of the received signal strength is relayed by the respective line unit 12 to the respective radio control unit RC1, RC3, RC5, RC11, RC13 and RC15. The intelligence in the system controller SC determines or votes which of these stations has received the strongest or clearest signal from the particular secondary station. In this example it will be assumed that the primary station PS11 has received the strongest signal. The system controller SC then instructs that all subsequent forward control signalling is to be by way of the primary station PS11 in the cell C2 and the return signals are to be forwarded from either the primary station or a selected receiving station in that cell. Signal strength indications may be provided continuously, intermittently or on demand.

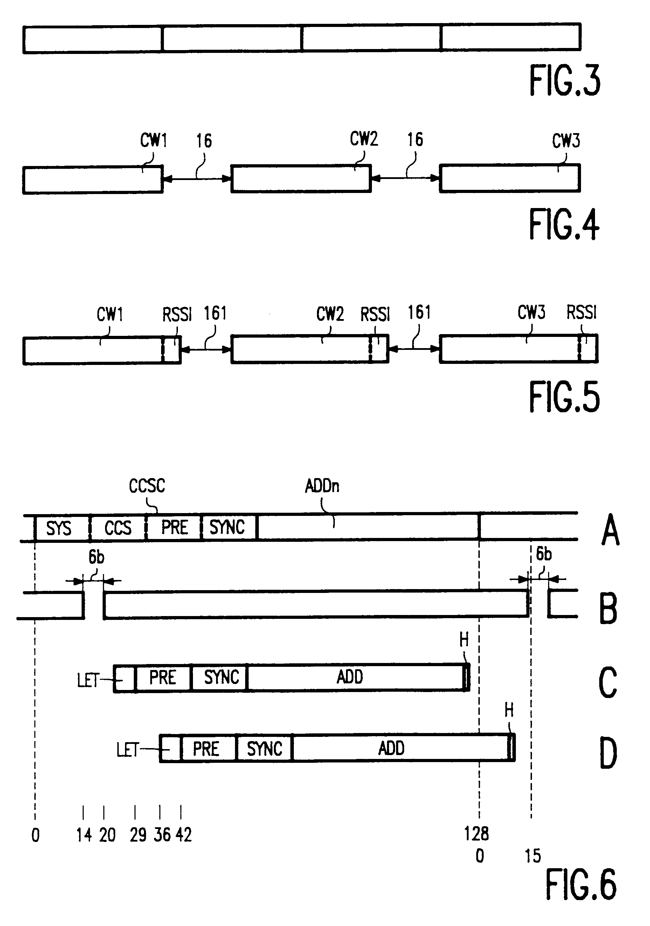

In accordance with the present invention, the signal strength indications RSSI are included in or comprise bits appended to codewords which are sent by line units 12 to their respective radio controllers. Appending bits in this manner is possible because although concatenated messages or codewords, see Figure 3, are sent/transmitted in the forward direction, that is from the system controller to a primary station for onward transmission, codewords sent in the reverse direction are separated by gaps 16 (Figure 4). Figure 5 shows the appended RSSI bits to the respective codewords CW1 to CW3. The gaps 161 between successive modified codewords are smaller than the gaps 16 in Figure 4 and in certain situations may be non-existent. Appending the RSSI bits in this way has a number of advantages in that the data rate and thereby the bandwidth is unaffected. Also no loss of information is likely to occur because there is no need to prepare special messages and find time slots in which to insert them. Further in radio systems such as trunked p.m.r. the modulation may be fast frequency shift keying (FFSK) which is very susceptible to phase distortion and in consequence on the land line links to the radio control units it is desirable to provide equalisation to avoid distortion and loss of intelligibility. One method of reducing the risk of phase distortion is to demodulate the received signal, append the RSSI bits to the decoded message and then recode and remodulate the extended codeword for onward transmission to the system controller.

Referring to Figure 2, the primary station PS comprises an antenna 18 which is connected to a diplexer 20 having an output 22 and an input 23. The output 22 is connected to a receiver 24 which provides input signals to a demodulator 26 and to a signal strength measuring means 14. The output from the demodulator is decoded in a decoder 28. A signal processor 30 has inputs for receiving the decoded signal from the decoder 28 and an indication of the radio signal strength from the means 14. The processor 30 appends the radio signal strength indications to the decoded received codeword and the newly created codeword is encoded in an encoder 32, remodulated as a FFSK signal in modulator 34 and relayed to the line unit 12.

Signals in the forward direction from the system controller SC are relayed by the respective radio control unit RC to the line unit 12. The signals are encoded in an encoder 36, modulated as FFSK signals in a modulator 38 and passed to a transmitter 40. The output of the transmitter 40 is connected to the input 23 of the diplexer 20.

A receiving station can comprise the features referenced 12, 14, 18 and 24 to 34 in Figure 2.

One application of the method in accordance with the present invention is to provide rapid voting and call set-up in trunked private land mobile radio systems of the type disclosed in MPT 1327 published January 1988 by the Radiocommunications Division of the Department of Trade and Industry, London. The control channel discipline for secondary units (or radio units) specified in Section 6.2 of MPT 1327 requires messages from the secondary stations to conform to certain requirements which create gaps between successive secondary station messages on the return control channel.

In order to explain this further, the signal format on the forward control channel, that is from the trunking system controller comprises a start-up sequence followed by concatenated pairs of equal length codewords, each pair occupying one slot of 128 bits, the signalling rate being 1200 baud. Figure 6A shows one complete pair of codewords comprising a Control Channel System Codeword CCSC and and Address Codeword ADDn. The CCSC comprises a System Codeword SYS, a Codeword Completion Sequence CCS, Preamble PRE and Synchronisation Sequence SYNC. For control channel discipline the start of slots on the return control channel shall be deemed to be coincident with the start of the CCSC on the forward control channel and timings are specified in bit periods relative to this point in time.

Figure 6B illustrates the limits on the secondary station's transmitter power-up and shows a minimum gap of 6 bits.

Figure 6C and 6D illustrate respectively the earliest and latest secondary station's messages. Each message comprises a Link Establishment Time, LET, which has a minimum value of 6 bit periods, PRE, SYNC. Address Codeword ADD and a Hang-over bit H which is appended to the last transmitted message. MPT 1327 specifies that a secondary unit shall not commence rf transmission before the start of bit 21, nor shall it reach 90 per cent of its maximum power later than the start of bit 37.

Further the secondary station shall cease transmission so that power is reduced by at least 60dB by the start of the next occurring bit 15 of the next following slot. Hence the minimum gap between a secondary station's transmitter power-up limits is 6 bits. Further the minimum gaps between received codewords including LET and excluding LET are 12 bits and 18 bits, respectively.

Assuming that secondary stations will not transmit decodable bits while they power-up, then the primary station will receive codewords separated by a minimum of 12 bits if the LET sequence is passed on to the system controller SC by the primary station. Those 12 available bits can be used to encode the current signal strength, say 3 binary bits, and error checking information. One format for the appended bits is as follows:

Bit 1 : Fixed 0b or 1b, where b indicates binary bit, to allow processing time at the system controller and primary station.

Bits 2 to 4 : Three bits of signal strength measurement.

Bit 5 : Fixed 0b or 1b to allow processing time at the system controller and primary station if required.

Bits 6 to 8 : Duplicated three bits of signal strength measurement.

Bit 9 : Fixed 0b or 1b to allow processing time.

Error detection can be carried out in the system controller SC by comparing the two received signal strength measurements. If they differ the data is assumed incorrect and rejected. The next correctly received measurement replaces the previous correctly received measurement.

By appending signal strength data bits in this way, the time overhead taken to receive the information, to vote and to set up a call is very small, which fits well with public safety applications which require fast call set-up times. Although codewords sent during calls will be extended slightly, the overhead of an extra 8ms on top of the 50ms would not be appreciably audible because a speech syllable is of the order of 40ms.

In those cases where selected messages from secondary stations have more than one codeword and in order to implement the method in accordance with the present invention, the primary or receiving station must be intelligent enough to treat these longer messages as one codeword and look for the signal strength data bits appended to the last data codeword of the transmission. In certain situations non-standard as well as standard codewords are transmitted and the primary and receiving stations together with the system controller must be capable of handling these codewords.

From reading the present disclosure, other modifications will be apparent to persons skilled in the art. Such modifications may involve other features which are already known in the design, manufacture and use of radio communication systems and component parts thereof and which may be used instead of or in addition to features already described herein. Although claims have been formulated in this application to particular combinations of features, it should be understood that the scope of the disclosure of the present application also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A method of voting in a radio communication system in which encoded radio signal strength indications are appended to messages relayed to a system controller and in which the system controller votes on which of the radio signal strength indications is the best.

2. A method of voting in a radio communication system comprising a system controller linked to a plurality of fixedly sited stations capable of receiving signals on a predetermined channel, wherein each said station determines the strength of a received message signal, encodes an indication of the signal strength and appends the encoded signal strength indication to messages which are relayed by the station to the system controller, the system controller voting on which of the stations has received the stronger (or strongest) message signal.

3. A method as claimed in Claim 2, characterised in that the encoded signal strength indication is appended to the ends of the respective messages.

4. A method as claimed in Claim 2 or 3, characterised in that the encoded signal strength indication is duplicated and in that the system controller compares said indications and accepts them as being valid if they are the same.

5. A method as claimed in Claim 2, 3 or 4, characterised in that when the message comprises at least two codewords, the encoded signal strength indication is appended to the last codeword of the message, and in that the system controller is adapted to distinguish between messages having one and more than one codeword and to recognise the encoded signal strength indication.

6. A method as claimed in any one of Claims 2 to 5, characterised in that each said station demodulates and decodes a received message to recover a codeword, appends the signal strength indication to the codeword to form an extended codeword, and encodes and modulates the extended codeword.

7. A method as claimed in Claim 6, characterised in that the message is transmitted by fast frequency shift keying (FFSK).

8. A method as claimed in any one of Claims 2 to 7, characterised in that the data rates of the received message signals and of the messages relayed by the said station are the same.

9. A radio communication system comprising a system controller, a plurality of fixedly sited stations capable of receiving signals on a predetermined channel coupled by links to the system controller, each said station including means for measuring the strength of a received message signal and for providing an indication of the measured signal strength and means for appending said indication to the received message signal for forwarding to the system controller and said system controller including voting means for determining which of the said stations has received to the stronger (or strongest) message signal.

10. A system as claimed in Claim 9, characterised in that the means for appending said indication to the received message duplicates said indication and in that the system controller comprises error detecting means which compares the duplicated indications and accepts them as being valid if they are the same.

11. A system as claimed in Claim 9 or 10, characterised in that each said station includes means for demodulating and decoding a received message signal to recover the codeword, means for appending a signal strength indication to the codeword to form an extended codeword, and means for encoding and modulating the extended codeword.

12. A system as claimed in Claim 9, 10 or 11, characterised in that each said station includes means for distinguishing between received message signals comprising one or at least two codewords and for appending the indication of the measured signal strength to the last

codeword.

FIG. 1

FIG.2

FIG.3

FIG.4

FIG.5

FIG.6